# EUROPÄISCHE PATENTANMELDUNG

(11) **EP 0 841 634 A2**
(43) Veröffentlichungstag der Anmeldung: **13.05.1998**
(21) Anmeldenummer: 97118538.4
(22) Anmeldetag: 24.10.1997
(51) Int. Cl.: G06K 19/077

(54) **Verfahren zum Herstellen einer Chipkarte und Vorrichtung zum Durchführen des Verfahrens**

(30) Priorität: 08.11.1996 DE 19646184
(71) Anmelder: ODS R. Oldenbourg Datensysteme GmbH & Co. KG, 85375 Neufahrn (DE)
(72) Erfinder: Schmidt, Frank-T., Dr. rer. nat., 99891 Fischbach (DE)
(74) Vertreter: Grünecker, Kinkeldey, Stockmair & Schwanhäusser Anwaltssozietät

(57) **Zusammenfassung**

Bei einem Verfahren zum Herstellen einer wenigstens eine Spule enthaltenden Chipkarte aus mehreren Schichten eines Schichtenaufbaus, bei dem wenigstens ein zusammenhängender, offener Kanal zum Einlegen und Positionieren der Spule in eine erste Schicht eingeformt wird, wobei ein einen zusammenhängenden Kanalverlauf verhindernder Teil der ersten Schicht unter Temperatur- und Druckbeaufschlagung zum Schmelzen und Zerfließen gebracht wird, wird benachbart zur ersten Schicht eine zweite Schicht angeordnet, in der in Ausrichtung auf den zusammenhängenden Kanalverlauf verhindernde Teile der ersten Schicht Ausweichräume geformt sind, und werden die Teile unter Heftverbinden der Schichten aus der Ebene der ersten Schicht zumindest überwiegend in die Ebene der zweiten Schicht und in die Ausweicheräume verdrängt. Die zum Durchführen des Verfahrens geeignete Vorrichtung weist eine Auflage 18 für die mindestens zwei Schichten (1a, 1b, 1c) auf, und ein der Auflage (18) gegenüberliegendes, senkrecht zur Auflage (18) bewegbares Preßwerkzeug (12, 12a, 12b) sowie eine Heizvorrichtung (14).

## Beschreibung

Die Erfindung betrifft ein Verfahren gemäß dem Oberbegriff des Patentanspruchs 1 sowie eine Vorrichtung zum Durchführen des Verfahrens gemäß Oberbegriff des Patentanspruchs 11.

Kontaktlos benutzbare oder kontaktlos und mit Kontaktierung benutzbare Hybrid-Chipkarten sind aufgrund der für die kontaktlose Datenübertragung benötigten, meist großen Spule in hoher Qualität schwierig herzustellen, weil u.a. die Einbettung und Positionierung der Spule zu Problemen im Herstellungsablauf führen. Die mit dem IC-Baustein verbundene Spule bildet im Regelfall eine ringförmig geschlossene Struktur, die zum Einbringen in den Schichtenaufbau eine sacklochartige oder ringförmige Aussparung in wenigstens einer Schicht bedingt. Das Ausfüllen einer sacklochartigen, mit der Spule bestückten Aussparung ist zum Erzielen eines homogenen Kartenaufbaus und einer gleichförmigen Dicke schwierig. Eine ringförmige Aussparung mit zusammenhängendem Verlauf ist zwar stanztechnisch durch einen die Schicht durchdringenden Doppelschnitt mit innerer und äußerer Stanzkante formbar. Jedoch muß dann der mit dem Außenbereich der Schicht nicht mehr verbundene Innenbereich vorübergehend positioniert und fixiert werden, was sich nur schwierig und mit zusätzlichen Arbeitsschritten und Hilfsmitteln erzielen läßt, die bei einer Serienherstellung unerwünscht sind. Die Aussparung überbrückende und bleibende Haltestege für den Innenbereich sind für hochqualitative Chipkarten nicht akzeptabel, da sie zu Verformungen der Spule führen, eine unerwünschte hohe mechanische Belastung der Spule bei Benutzung der Chipkarte bedingen, und die Oberflächengüte bzw. die gleichförmige Dicke der Karte beeinträchtigen. Für qualitativ hochwertige Chipkarten mit wenigstens einer Spule wird deshalb ein positionsgenauer, durchgehender Kanal benötigt, der das Einbetten und auch ein Positionieren der Spule während der Kartenherstellung ermöglicht.

Bei einem aus EP-A2-0 723 244 bekannten Verfahren wird die zum Unterbringen der Spule bestimmte Schicht mit durch Haltestegen unterbrochenen Kanalabschnitten vorgefertigt, damit der Innenbereich der Schicht (innerhalb des Kanalverlaufs) mit dem Außenbereich stabil verbunden bleibt und sich die Schicht als Ganzes problemlos handhaben läßt. Die Spule wird dann in die Kanalabschnitte und über die Haltestege hinweg verlegt. Dann wird darauf eine durchgehende Schicht plaziert und werden beim Laminieren des Schichtenaufbaus die Haltestege durch Wärme und Druck plastifiziert. Die Haltestege fließen in angrenzende Kanalabschnitte, so daß ein Kanal mit zusammenhängendem Kanalverlauf entsteht, in dem sich die Spule selbsttätig positionieren soll. Jedoch sind die Spule und die Haltestege dabei sich selbst überlassen, so daß der endgültige Verlauf der Spule und ihre Positionierung von außen unbeeinflußbar dem Zufall unterliegen und in einem breiten Bereich streuen können. Es ergeben sich signifikante Qualitätsunterschiede in den fertigen Karten. Der Ausschuß ist hoch.

Bei einer Verfahrensvariante gemäß EP-A2-0 723 244 wird die für den Kanal bestimmte erste Schicht zunächst ausgenommen entlang des späteren Kanalverlaufs mit einer durchgehenden, zweiten Schicht verklebt. Der Kanalverlauf ist dabei durch vorherigen lokalen Trennmittelauftrag gegen Verklebung gesichert. Dann wird der Kanal mit zusammenhängendem Kanalverlauf ausgestanzt. Die mit der ersten Schicht verklebte zweite Schicht stabilisiert den Innenbereich relativ zum damit nicht mehr verbundenen Außenbereich der ersten Schicht, bis die Spule eingelegt und der Schichtenaufbau vervollständigt und verbunden wird. Dies ist vorrichtungs- und verfahrenstechnisch außerordentlich aufwendig. Vom Trennmittel bleibt ein Rest, der wie die Klebeschicht eine hinsichtlich der Belastbarkeit der fertigen Karte im Gebrauch ungünstige Schwachstelle bildet. Das Stanzwerkzeug ist aufwendig, weil es eine innere und eine äußere Stanzschneide und eine Aushebevorrichtung für den ausgestanzten Schichtanteil benötigt.

Weitere Verfahren zum Herstellen kontaktloser Karten mit großen Spulen sind bekannt aus EP-A2-0 481 776, DE-C2-43 02 387 und DE-C2-37 21 882.

Der Erfindung liegt die Aufgabe zugrunde, ein Verfahren der eingangs genannten Art sowie eine Vorrichtung zum Durchführen des Verfahrens anzugeben, die die Herstellung qualitativ hochwertiger Chipkarten ermöglichen, in denen die Spule ohne unerwünschte Verformung exakt positioniert ist.

Die gestellte Aufgabe wird erfindungsgemäß mit den Merkmalen des Patentanspruchs 1 und des Vorrichtungsanspruchs 11 gelöst.

Die später die Stabilisierungsfunktion für den Innen- und den Außenbereich der ersten Schicht übernehmende zweite Schicht enthebt zumindest zum Großteil die erste, für den Kanal bestimmte Schicht der Aufgabe, zum Formen des zusammenhängenden Kanalverlaufs verdrängte Schichtteile im Kanal selbst aufnehmen zu müssen. Da der zunächst vorhandene Teil in die zweite Schicht ausweichen kann, läßt sich der Kanal mit zusammenhängendem Kanalverlauf außerordentlich exakt in der ersten Schicht formen. Die beiden stabil verbundenen Schichten lassen sich bequem handhaben, da die in der ersten Schicht gegebenenfalls geformten Kanalabschnitte und die in der zweiten Schicht geformten Ausweichräume keine eigenbeweglichen Schichtbereiche entstehen lassen. Sobald unter Verdrängen wenigstens eines Teils der ersten Schicht in die Ausweichräume der zusammenhängende Kanalverlauf in der ersten Schicht hergestellt ist, sind auch beide Schichten miteinander verbunden, so daß sich der dann nicht mehr mit dem Außenbereich verbundene Innenbereich der ersten Schicht nicht mehr relativ zum Außenbereich verlagern kann. Für die Heftverbindung ist der verdrängte plastifizierte Teil der ersten Schicht nutzbar, so daß nicht notwendigerweise Klebstoff eingebracht zu werden braucht. Der wichtigste Vorteil liegt jedoch darin, daß der auf diese Weise mit zusammenhängendem Verlauf gebildete Kanal eine extrem präzise Form erhält, so daß sich die Spule nachher genau positionieren läßt und keine Verformungen erfährt. Dies führt auch bei Serienherstellung zu hoher Chipkartenqualität mit enger Qualitätsstreuung und geringer Ausschußquote.

Zweckmäßig werden die Schichten mittels des plastifizierten verdrängten Teils oder mehrerer verdrängter Teile aneinander geheftet, damit die zweite Schicht die voneinander getrennten Bereiche der ersten Schicht stabilisiert. Die Heftstellen bilden im Endprodukt keine störenden Inhomogenitäten, da sie ggfs. beim endgültigen Laminieren beseitigt werden.

Verfahrenstechnisch einfach werden die Teile in zur Oberfläche senkrechter Richtung verdrängt, und zwar vollständig aus der Ebene der ersten Schicht, oder wenigstens zum größten Teil.

Um zu vermeiden, daß die verdrängten Teile vollständig wegfließen und gegebenenfalls Unebenheiten an der Unterseite der zweiten Schicht erzeugen, wird gemäß Anspruch 4 eine dritte Schicht zur Abdeckung vorgesehen. Diese dritte Schicht wird, ggfs. ebenfalls mittels der verdrängten Teile, angeheftet.

Eine besonders zweckmäßige Verfahrensvariante geht aus Anspruch 5 hervor. In der ersten Schicht werden einfache Kanalabschnitte geformt. Der Innenbereich der Schicht bleibt mit dem Außenbereich durch die Haltestege bildenden Teile verbunden, so daß sich die Schicht problemlos handhaben läßt. In der zweiten, ebenfalls in sich stabilen Schicht sind auf die Haltestege ausgerichtete Durchbrechungen geformt, zweckmäßigerweise als formtechnisch einfache Durchgänge. Unter Berücksichtigung der Dicke der zweiten Schicht sollten diese Ausweichräume so dimensioniert sein, daß sie das verdrängte Volumen gerade vollständig aufzunehmen vermögen. Wenn die Haltestege durch Erhitzen und unter Druck in die Ausweichräume verdrängt werden, entsteht der sauber geformte Kanal mit zusammenhängendem Kanalverlauf zum späteren Positionieren und Einsetzen der Spule. Es wird entweder nur lokal begrenzt auf die Haltestege mit Druck und Temperatur eingewirkt (Anspruch 6), oder im gesamten Kanalverlauf (Anspruch 8).

Die Verfahrensvariante gemäß Anspruch 7 ist zweckmäßig, weil die erste Schicht keiner oder nur einer geringfügigen Vorbehandlung bedarf. Die Ausweichräume sind in Anzahl und Größe so in der zweiten Schicht geformt, daß der beim späteren Formen des Kanals verdrängte Teil der ersten Schicht vollständig aufgenommen wird. Der Kanal wird erst durch Heißpressen geformt. Es ist zwar eine größere Menge der ersten Schicht zu verdrängen als bei der Verdrängung nur von Haltestegen, jedoch kann sich dadurch eine besonders innige Haftung der Außen- und Innenbereiche der ersten Schicht an der zweiten Schicht ergeben.

Damit in der Verdrängungsphase die vorübergehend nicht körperlich miteinander verbundenen Bereiche der ersten Schicht ihre Relativpositionen beibehalten, wird gemäß Anspruch 9 von der Oberfläche der ersten Schicht her niedergehalten.

Gemäß Anspruch 10 wird in dem Herstellungsverfahren in einem Zwischenschritt das Zwischenprodukt mit dem präzise geformten zusammenhängenden Kanal gebildet. Dieser Zwischenschritt läßt sich einfach in eine Serienproduktion eingliedern.

Die Vorrichtung gemäß Anspruch 11 ist baulich einfach, funktionssicher und ermöglicht eine hohe Ausstoßrate qualitativ hochwertiger Zwischenprodukte. Die Heizeinrichtung kann die notwendige Wärme durch Strahlung oder Ultraschall erzeugen. Es könnte in das Preßwerkzeug eine Sonotrode integriert sein. Die Schichten werden als Einzelformate oder in Bogenformaten oder in Rollen endlos verarbeitet. Speziell beim Verdrängen nur der Haltestege aus der ersten Schicht ergeben sich wünschenswert kurze Taktzeiten.

Gemäß Anspruch 12 wird mit den Werkzeugstempeln nur auf die zwischen den Kanalabschnitten vorliegenden Haltestege eingewirkt.

Gemäß Anspruch 13 wird hingegen im gesamten Kanalverlauf mit dem Werkzeugstempel gearbeitet. Es können abhängig vom Aussehen der vorbereiteten ersten Schicht entweder nur die Haltestege verdrängt werden oder auch der gesamte, im späteren Kanalverlauf vorliegende Teil der ersten Schicht. In jedem Fall gibt erst der Werkzeugstempel bzw. geben die Werkzeugstempel dem Kanal exakt die erforderliche Endform.

Auf einfache Weise wird gemäß Anspruch 14 mit dem Niederhalter oder den Niederhaltern ein Verrutschen der Bereiche der ersten Schicht relativ zueinander bzw. der ersten Schicht relativ zur zweiten, und gegebenenfalls dritten, Schicht vermieden.

Die Positioniereinrichtungen gemäß Anspruch 15 unterstützen das paßgenaue Fügen der Schichten.

Anhand der Zeichnung werden Ausführungsformen des Erfindungsgegenstandes erläutert. Es zeigen:
- Fig. 1: in Explosionsdarstellung verschiedene Komponenten zur Herstellung einer Chipkarte,
- Fig. 2: in Explosionsdarstellung Komponenten zur Herstellung eines Zwischenprodukts,
- Fig. 3: einen Schnitt in der Ebene III-III von Fig. 2 beim Fügen der dort gezeigten Komponenten,
- Fig.4A-C: Verfahrensschritte beim Fügen der in Fig. 3 gezeigten Komponenten bis zur Fertigstellung des Zwischenprodukts,
- Fig. 5: eine Explosionsdarstellung von Komponenten einer Ausführungsvariante des Zwischenprodukts, und
- Fig.6A-C: das Zwischenprodukt von Fig. 5 in Verfahrensphasen beim Fügen der Komponenten.

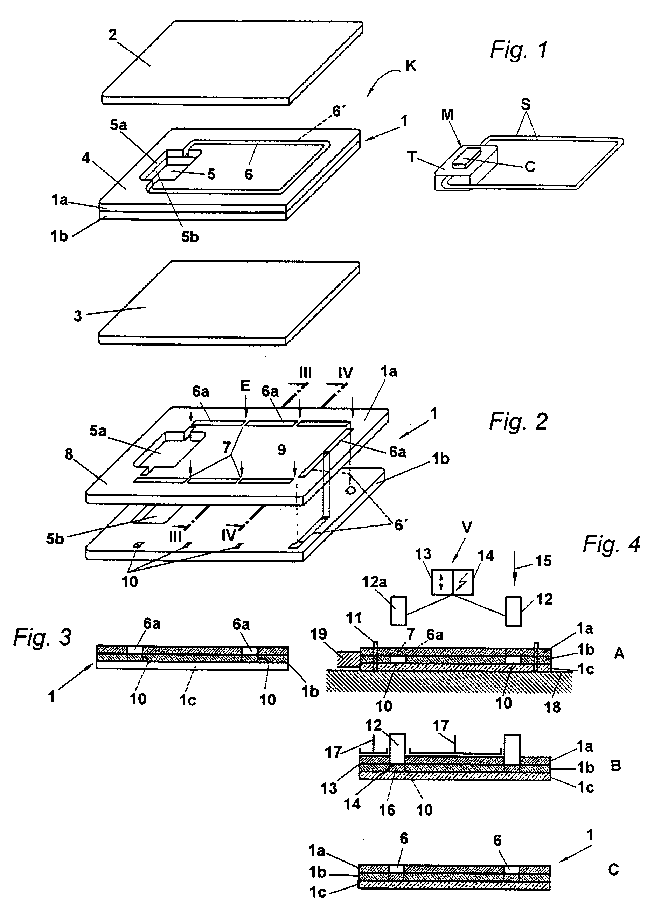

Eine Chipkarte K wird gemäß Fig. 1, z.B. durch Laminieren, aus einer ein Zwischenprodukt darstellenden Innenschicht 1 und mindestens zwei weiteren Abdeckschichten 2, 3 in einem Schichtenaufbau hergestellt. In das die Innenschicht 1 bildende Zwischenprodukt wird ein Chipmodul M eingefügt, der beispielsweise wenigstens einen IC-Baustein C auf einem Träger T und wenigstens eine große und im Grundzug ringförmige Spule S besitzt, die mit dem IC-Baustein gekoppelt ist.

In der Innenschicht 1 ist ggfs. eine zur Oberfläche 4 offene Aussparung 5 (für den Träger T mit dem IC-Baustein) geformt, die mit einem ebenfalls zur Oberfläche 4 offenen Kanal 6 verbunden ist, der einem zusammenhängenden Kanalverlauf 6 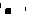 folgt und in Form und Größe exakt zum Unterbringen und Positionieren der Spule S ausgelegt ist. Die Innenschicht 1 besteht aus einer ersten Schicht 1a und einer daran angehefteten zweiten Schicht 1b, und gegebenenfalls einer (Fig. 3) dritten ebenfalls angehefteten Schicht 1c. Die Aussparung 5 kann durch beide Schichten 1a und 1b durchgehen. Der Kanal 6 befindet sich beispielsweise nur in der ersten Schicht 1a.

Fig. 2 bezieht sich auf eine erste Verfahrensvariante zum Herstellen des Zwischenprodukts (Innenschicht 1 in Fig. 1). Die erste Schicht 1a ist z. B. durch Stanzen mit dem Teil 5a der Aussparung 5 versehen, und weiterhin mit entlang des zu schaffenden zusammenhängenden Kanalverlaufs 6 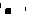 (s. Fig. 1) aufeinanderfolgenden Kanalabschnitten 6a, zwischen denen Teile 7 stehen, die Haltestege zum gegenseitigen Stabilisieren eines Außenbereichs 8 in Relation zum Innenbereich 9 bilden. Zweckmäßigerweise sind die Haltestege so bemessen, daß sich die Schicht 1a einfach handhaben läßt.

Die zweite Schicht 1b kann ebenfalls mit einem Teil 5b der Aussparung 5 (Fig. 1) versehen sein. Sie weist ferner in Ausrichtung auf den zusammenhängenden Kanalverlauf 6 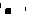 einzelne Ausweichräume 10 auf (in Form von Durchbrechungen oder Bohrungen). Die Ausweichräume 10 sind relativ genau auf die Teile 7 (Haltestege) in der ersten Schicht ausgerichtet, sobald die beiden Schichten 1a und 1b passgenau gefügt werden. Nach dem Fügen werden in Bereichen E in Richtung der angedeuteten Pfeile Wärme und Druck ausgeübt, um die Teile 7 zumindest in überwiegendem Maß in die Ausweichräume 10 zu verdrängen und dabei die beiden Schichten 1a, 1b mittels des verdrängten Werkstoffes (die Schichten 1a, 1b bestehen aus thermoplastischem Werkstoff) aneinander zu heften.

Fig. 3 verdeutlicht im Schnitt, daß unter den Kanalabschnitten 6a in der ersten Schicht 1a die volle Wandstärke der zweiten Schicht 1b vorliegt, da die Ausweichräume 10 (gestrichelt) nur unterhalb der Teile 7 positioniert sind. Gegebenfalls ist die dritte Schicht 1c unter die beiden anderen Schichten 1a, 1b gelegt.

In Fig. 4A sind die (in diesem Fall) drei Schichten 1a, 1b, 1c auf eine Auflage 18 einer Vorrichtung V zum Herstellen des Zwischenprodukts 1 aufgelegt. Positioniereinrichtungen wie Paßstifte 11, die in Paßlöcher der Schichten eingreifen; oder Anschläge 19 positionieren die Schichten 1a, 1b und 1c relativ zueinander. In der Schnittansicht von Fig. 4A befinden sich die Kanalabschnitte 6a hinter oder vor der Bildebene (gestrichelt angedeutet), während jeweils ein Teil 7 (Haltesteg) der ersten Schicht 1a über einem Ausweichraum 10 der zweiten Schicht 1b liegt. Die Ausweichräume 10 werden nach unten durch die dritte Schicht 1c abgedeckt. In der Vorrichtung steht ein Preßwerkzeug 12 bereit, das gegebenenfalls einzelne Werkzeugstempel 12a aufweist, die auf die Teile 7 ausgerichtet sind und sich in Richtung des Pfeils 15 absenken lassen. Der Werkzeugstempel 12 ist mittels eines Antriebs 13 auf- und abverstellbar. Zusätzlich ist eine Heizeinrichtung 14 vorgesehen, mit der über den Werkzeugstempel 12 oder in dessen Einwirkbereich auf die erste Schicht 1a Wärme aufbrinbar ist.

In Fig. 4B ist der Werkzeugstempel 12 abgesenkt, bis die Teile 7 in die Ausweichräume 10 verdrängt sind und der Kanal 6 im Entstehen ist. Das Preßwerkzeug 12 wird zweckmäßigerweise bis zum Übergangsbereich zwischen der ersten und der zweiten Schicht 1a, 1b abgesenkt. Es ist denkbar, das Preßwerkzeug 12 bereits etwas oberhalb der Berührungsebene der beiden Schichten anzuhalten oder sogar über die Berührungsebene der beiden Schichten hinaus zu bewegen. Unter dem Einfluß von Druck und Temperatur werden die Teile 7 plastifiziert, ehe sie in die Ausweichräume 10 verdrängt werden und diese ausfüllen (Füllung 16 in Fig. 4B). Beim Verdrängen der Teile 7, bzw. vor dem Verdrängen, werden Niederhalter 17 der Vorrichtung auf die Oberfläche der ersten Schicht 1a aufgelegt, um den Schichtenverbund zu stabilisieren und ein seitliches Ausquetschen der verdrängten Teile 7 zu vermeiden. Ein geringer Anteil der Teile 7 kann jedoch ggfs. in die Berührungsebene zwischen den ersten und zweiten Schichten eindringen, um den Innenbereich 9 und den Außenbereich 8 mit der zweiten Schicht 1b inniger zu verbinden. Begrenzungsflächen 13 und 14 des Preßwerkzeugs bzw. der Werkzeugstempel 12a formen die Wände des Kanals 6 zumindest in den Bereichen, in denen sich zuvor die Teile 7 befanden, und zwar passend zu den Kanalabschnitten 6a.

Gemäß Fig. 4C liegt nach dem Hochziehen des Werkzeugstempels 12 der präzise geformte, zusammenhängende Kanal 6 vor, und sind in dem Zwischenprodukt 1 die Schichten 1a, 1b (und gegebenenfalls 1c) miteinander durch Heften verbunden.

Dieses Zwischenprodukt 1 wird dann gemäß Fig. 1 in den Schichtenaufbau bei der Herstellung der Chipkarte eingebracht. Alternativ wäre es auch möglich, das Zwischenprodukt in einer Spritzform zu positioniern, und die oberen und unteren Deckschichten in einem Spritzvorgang anzubringen, und zwar nach Einbringen des Chipmoduls M mit der Spule S.

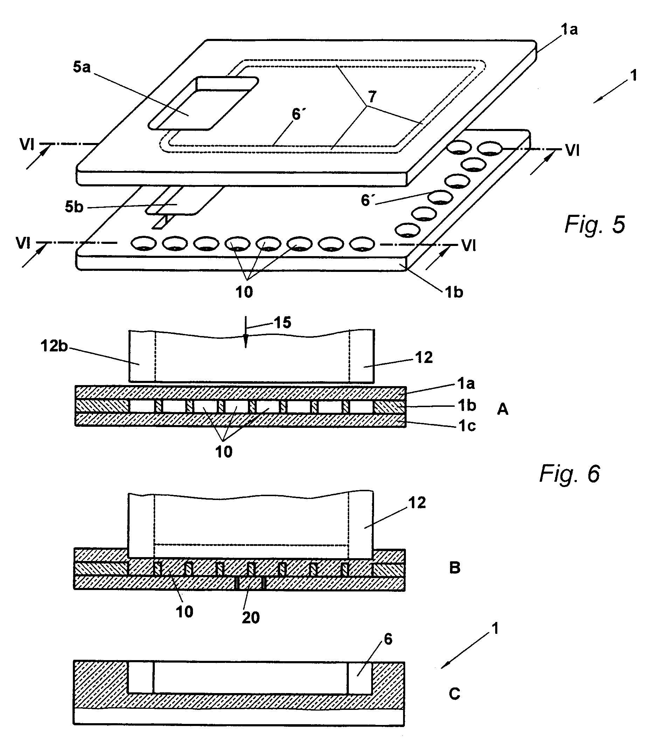

Bei der Verfahrensvariante gemäß Fig. 5 wird das Zwischenprodukt aus ersten und zweiten Schichten 1a und 1b (und gegebenenfalls einer dritten Schicht 1c) hergestellt. Die erste Schicht 1a weist z.B. bereits den Teil 5a der Aussparung 5 für den Chipmodul auf. Darüber hinaus ist die erste Schicht 1a durchgehend ausgebildet. Der zusammenhängende Kanalverlauf 6' existiert nicht, sondern wird noch durch den Teil 7' der ersten Schicht 1a ausgefüllt. Die zweite Schicht 1b, die gegebenenfalls ebenfalls bereits mit dem Teil 5b der Aussparung 5 durch Ausstanzen vorgeformt ist, weist eine Vielzahl auf den zusammenhängenden Kanalverlauf 6' ausgerichteter, aufeinanderfolgende Ausweichräume 10 auf, z.B. in Form einer Durchbrechungsreihe oder einer Perforation.

Gemäß Fig. 6 werden die Schichten (hier mit der dritten Schicht 1c) gefügt (in einer Vorrichtung ähnlich der von Fig. 4), wobei zunächst bei noch nicht abgesenktem Werkzeugstempel 12 die Ausweichräume 10 leer sind. Der Werkzeugsstempel 12 ist bei 12b entsprechend dem zusammenhängendem Kanalverlauf 6' geformt, und wird in Fig. 6b unter gleichzeitiger oder voreilender Einwirkung von Wärme in die erste Schicht 1a in Richtung des Pfeils 15 abgesenkt, bis er in die erste Schicht 1a eindringt und den Teil 7' in die Ausweichräume 10 verdrängt. Dabei werden die Schichten aneinandergeheftet und wird der in Fig. 6c gezeigte zusammenhängende Kanal 6 für die Spule S geformt.

Gegebenenfalls sind in der dritten Schicht 1c unterhalb der Ausweichräume 10 Entlüftungslöcher 20 geformt, die das lufteinschlußfreie Verdrängen der Teile 7, 7' begünstigen und auch das Anheften verbessern, weil gegebenenfalls kleine Anteile der verdrängten Teile eindringen. Schließlich könnte zwischen den Schichten, zumindest im Mittelbereich, Klebstoff eingebracht werden.

## Patentansprüche

1. Verfahren zum Herstellen einer wenigstens eine Spule enthaltenden Chipkarte (K) aus mehreren Schichten eines Schichtenaufbaus, bei dem in wenigstens einer innenliegenden ersten Schicht wenigstens ein zumindest zu einer Schichtoberfläche offener Kanal mit zusammenhängendem Kanalverlauf zum Einlegen und Postionieren der Spule (S) geformt und Zumindest ein einen zusammenhängenden Kanalverlauf verhindernder Teil (7, 7') der ersten Schicht (1a) unter Temperatur- und Druckeinwirkung zum Schmelzen und Fließen gebracht wird, **dadurch gekennzeichnet,** daß in einer zweiten Schicht (1b) wenigstens ein Ausweichraum (10) geformt wird, daß die zweite Schicht (1b) benachbart zur ersten Schicht (1a) derart angeordnet wird, daß der Ausweichraum (1c) in Ausrichtung auf den einen zusammenhängenden Kanalverlauf (6') verhindernden Teil (7, 7') der ersten Schicht (1a) liegt, und daß der Teil (7, 7') unter Heftverbinden der Schichten (1a, 1b) aus der Ebene der ersten Schicht (1a) zumindest überwiegend in die Ebene der zweiten Schicht (1b) und in den Ausweichraum (10) verdrängt wird.

2. Verfahren nach Anspruch 1, **dadurch gekennzeichnet,** daß die Schichten (1a, 1b) mittels des verdrängten Teils (7, 7 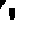 ) aneinander geheftet und innerhalb und außerhalb des zusammenhängenden Kanalverlaufs (6 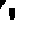 ) liegende Bereiche (8, 9) der ersten Schicht (1a) an der zweiten Schicht (1b) stabilisiert werden.

3. Verfahren nach Anspruch 1, **dadurch gekennzeichnet,** daß jeder Teil (7, 7') in einer zur Oberfläche (4) der ersten Schicht (1a) senkrechten Richtung (E) und zur zweiten Schicht (1b) verdrängt wird.

4. Verfahren nach wenigstens einem der Ansprüche 1 bis 3, **dadurch gekennzeichnet,** daß in der zweiten Schicht durchgängige Ausweichräume (10) geformt werden, die im Schichtenaufbau durch eine benachbart zur zweiten Schicht (1b) angeordnete dritte Schicht (1c) abgedeckt werden, und daß die drei Schichten (1a, 1b und 1c) beim Verdrängen zumindest des Teils (7, 7') in die Ausweichräurne (10) miteinander heftverbunden werden.

5. Verfahren nach wenigstens einem der vorhergehenden Ansprüche, **dadurch gekennzeichnet,** daß in der ersten Schicht (1a) entlang des Kanalverlaufs (6') durch wenigstens einen einen Haltesteg bildenden Teil (7) getrennte Kanalabschnitte (6a) geformt werden, daß in der zweiten Schicht (1b) entlang des Kanalverlaufs (6') und in Ausrichtung auf die Haltestege Ausweichräume (10) bildende Durchbrechungen geformt werden, vorzugsweise jeweils durch Stanzen, und daß bei im Schichtenaufbau aufeinandergelegten und relativ zueinander positionierten ersten und zweiten Schichten (1a, 1b) jeder Haltesteg von der der zweiten Schicht (1b) abgewandten Seite der ersten Schicht (1a) her plastifiziert und unter Bildung des Kanals (6) mit zusammenhängendem Kanalverlauf (6') zumindest weitgehend in die Durchbrechungen verdrängtwird.

6. Verfahren nach Anspruch 5, **dadurch gekennzeichnet,** daß zum Plastifizieren Wärme und Druck nur lokal begrenzt auf jeden Haltesteg zur Einwirkung gebracht werden.

7. Verfahren nach wenigstens einem der Ansprüche 1 bis 4, **dadurch gekennzeichnet,** daß eine durchgehende, gegebenenfalls einen Ausschnitt (5) für einen Chipmodul (M) aufweisende, erste Schicht (1a) mit der entlang des Kanalverlaufs (6') eine Vielzahl von Ausweichräumen (10), vorzugsweise eine Reihe von Durchbrechungen oder eine fortlaufende Perforation, aufweisenden zweiten Schicht (1b) zusammengefügt wird, und daß bei relativ zueinander positionierten Schichten (1a, 1b) der entlang des Kanalverlaufs (6') vorliegende Teil (7') der ersten Schicht (1a) zumindest weitgehend in die Ausweichräume (10) der zweiten Schicht (1b) verdrängt wird.

8. Verfahren nach wenigstens einem der Ansprüche 1 und 7, **dadurch gekennzeichnet,** daß mit Wärme und Druck im Bereich des gesamten zusammenhängenden Kanalverlaufs (6') auf die erste Schicht (1a) eingewirkt wird.

9. Verfahren nach den vorhergehenden Ansprüchen, **dadurch gekennzeichnet,** daß beim Verdrängen des Teils (7, 7') ein Außenbereich (8) und/oder ein vorn Außenbereich (8) durch den Kanalverlauf (6') trennbarer Innenbereich (9) der ersten Schicht (1a) mit Druck gegen die zweite Schicht (1b) niedergehalten wird bzw. werden.

10. Verfahren nach den vorhergehenden Ansprüchen, **dadurch gekennzeichnet,** daß beim Verdrängen des Teils (7, 7') und Verbinden der Schichten (1a, 1b, 1c) in einem ersten Verfahrensschritt ein Zwischenprodukt des Schichtenaufbaus hergestellt wird, daß die an einem wenigstens einen IC-Baustein (C) und Kontaktbereiche aufweisenden Halbzeug angeordnete Spule (S) in einem zweiten Verfahrensschritt in dem Kanal (6) positioniert wird, und daß in einem weiteren Verfahrensschritt weitere Schichten (2, 3) des Schichtenaufbaus durch Laminieren oder Anspritzen an dem Zwischenprodukt angebracht werden.

11. Vorrichtung zum Durchführen des Verfahrens nach wenigstens einem der Ansprüche 1 bis 10, **dadurch gekennzeichnet,** daß eine Auflage (18) für mindestens eine erste und eine zweite Schicht (1a, 1b) vorgesehen ist, von denen die zweite Schicht (1b) in einer gegenüber der Ebene der ersten Schicht (1a) versetzten Ebene entlang eines vorbestimmten, zusammenhängenden Kanalverlaufs (6') der ersten Schicht (1a) Ausweichräume (10) für wenigstens einen plastifizierten Teil (7, 7') der ersten Schicht (1a) aufweist, und daß ein der Auflage (18) gegenüberliegendes, senkrecht zu den Ebenen bewegbares Preßwerkzeug (12) und eine Heizvorrichtung (14) vorgesehen sind, die auf den zusammenhängenden Kanalverlauf (6') ausrichtbar sind.

12. Vorrichtung nach Anspruch 11, **dadurch gekennzeichnet,** daß das Preßwerkzeug (12) einzelne, nur auf jeden einen zusammenhängenden Kanalverlauf (6') in der ersten Schicht (1a) unterbrechenden Teil (7) ausgerichtete Werkzeugstempel (12a) aufweist.

13. Vorrichtung nach Anspruch 11, **dadurch gekennzeichnet,** daß das Preßwerkzeug (12) wenigstens einen durchgehenden Werkzeugstempel (12b) in Form und Größe des gesamten Kanals (6) mit zusammenhängendem Kanalverlauf (6') aufweist.

14. Vorrichtung nach Anspruch 11, **dadurch gekennzeichnet,** daß innerhalb und/oder außerhalb des oder der Werkzeugstempel(s) (12a, 12b) absenkbare Niederhalter (17) vorgesehen sind.

15. Vorrichtung nach Anspruch 11, **dadurch gekennzeichnet,** daß, vorzugsweise an der Auflage (18), Positioniereinrichtungen (11, 19) für die Schichten (1a, 1b, 1d), z.B. Paßstifte und/oder Anschläge, vorgesehen sind.
